# EUROPEAN PATENT SPECIFICATION

(11) **EP 2 082 402 B1**
(45) Date of publication and mention of the grant of the patent: **30.09.2015**
(21) Application number: 07820895.6
(22) Date of filing: 03.10.2007
(51) Int. Cl.: G21C 3/62, G21C 21/02

(54) **High burn-up nuclear fuel pellets**
Kernbrennstoff-Pellets mit hohem Abbrand
Pastilles de combustible nucléaires à combustion élevée

(30) Priority: 03.10.2006 EP 06121688
(43) Date of publication of application: 29.07.2009
(73) Proprietor: The European Atomic Energy Community (EURATOM), represented by the European Commission, 1049 Brussels (BE)
(72) Inventor: SPINO, José-Luis, 76646 Bruchsal (DE); SANTA CRUZ, Hernan, 76131 Karlsruhe (DE)
(74) Representative: Office Freylinger
(86) International application number: PCT/EP2007/060518
(87) International publication number: WO 2008/040768

(56) References cited:
- EP-A1- 0 502 395
- EP-A1- 1 246 203
- EP-B1- 0 855 083
- WO-A-00/00985
- JP-A- 1 107 193
- JP-A- 3 183 993
- JP-A- 3 243 890
- JP-A- 4 048 296
- US-A- 3 168 369
- US-A- 3 872 022
- A. Bel ET AL: "Frittage de l'oxyde d'uranium dans l'hydrogene A 1350° C", Journal of Nuclear Materials, vol. 1, no. 3, 1 October 1959 (1959-10-01) , pages 259-270, XP055108538, ISSN: 0022-3115, DOI: 10.1016/0022-3115(59)90022-4

## Description

### TECHNICAL FIELD

The present invention generally relates to the field of nuclear fuels, and more specifically to the manufacture of sintered nuclear fuel pellets adapted for extended burn-up.

### BACKGROUND ART

In order to reduce production costs and the inherent amounts of waste, operators of electronuclear power plants, in particular of the PWR and BWR type, wish to increase the burn-up of the uranium dioxide pellets contained in the fuel rods. In most countries with PWR and BWR technologies, the average discharge burn-up of fuel rods was increased by about 50 % between about 1980 and the year 2000, and is projected to nearly double by 2010 to 2015, with envisaged target discharge burn-ups beyond 60 GWd/tM.

Although the main constraint for achieving this goal resides in the increase in the level of enrichment, additional constraints arise from the fuel material itself, the properties of which are altered during irradiation. Indeed, as the fuel burn-up reaches higher levels, changes in the material occur in a more significant manner, namely: increase in fission gas release (FGR) and the associated increase in fuel rod internal pressure possibly leading to cladding lift-off, fuel swelling and restructuring, and the formation of a so-called High Burn-up Structure (HBS).

The HBS, also called Rim structure, is characterized by the development of a fine subgrain microstructure having high porosity and low thermal conductivity. The Rim has been observed in UO₂ and MOX fuels. The threshold burn-up for Rim formation corresponds with the acceleration in fission gas release in fuel pins. This has generated a concern that Rim formation may be the cause of high fission gas release in fuel at average burn-up beyond 45 GWd/tM.

Fission gas release is one of the most important parameters in the over all fuel pin performance, and is thus even more critical at high burn-ups. For example, for UO₂ fuels with burn-ups above 60 GWd/tM it is considered that of the amount of released fission gases (Xe, Kr) may exceed 10 % of the generated inventory. Since enhanced gas release to the fuel-clad gap and plenum regions degrades the heat conductivity of the gas-phase and increases the risk of fuel-rod failures by gas over-pressurisation, this issue requires mitigation if continuous fuel operation up to the highest burn-ups is to be achieved.

One well known proposal to reduce FGR is to increase the size of the uranium dioxide grains in the pellet. The basis of this approach is that longer diffusion distances retard the arrival of gas atoms to grain boundaries, thereby decelerating the primary escape process. Accordingly, sintered fuel pellets typically having a grain size of several microns are proposed to be replaced by pellets having grain sizes of up to several tens microns and more.

It may be noted that grain growth naturally occurs during the powder sintering stage, and there are different ways of controlling/promoting grain growth. These and other aspects of materials changes during fuel pellet operation as well as their mitigation by large grain structure have been for example described in US 6,808,656 and EP 0 502 395.

As is further well known, it has been proposed to reduce/prevent FGR by the inclusion of oxide nanoprecipitates, which are believed to bind the fission gas bubbles thus favouring the retention of gas in the matrix (see EP 0 855 083).

Although the use of enlarged grains has been proposed for reducing FGR, it has been remarked that an increase of the grain size reduces the creep speed, which might lead to less stress relaxation during pellet-cladding mechanical interaction.

US 3,872,022 discloses a method of sintering compacts of UO₂ powder using reactive gas atmospheres consisting of mixtures of hydrogen and carbon dioxide gases. In one example, a pellet was produced from a UO₂ powder under specific sintering conditions (sintering atmosphere 5 % hydrogen plus 95 % carbon dioxide - sintering temperature 1100 °C), the final pellet having a density of 97.2 % of the theoretical density, a O/U ratio of 2.007, and a grain size about 1 micron.

A method of sintering uranium oxide in hydrogen is disclosed in by A. Bel et al. in "Frittage de l'oxyde d'uranium dans l'hydrogene à 1350°C", Journal of Nuclear Materials, vol.1, no.3, October 1959, pages 259-270, XP055108538, ISSN: 0022-3115.

### OBJECT OF THE INVENTION

The object of the present invention is to provide an improved sintered nuclear fuel pellet that is particularly well adapted for extended burn-up, in that it permits reduction of fission gas release and improves stress relaxation.

This object is achieved by a pellet as claimed in claim 1.

### GENERAL DESCRIPTION OF THE INVENTION

By contrast to the common approach in the art, which is to produce sintered fuel pellets with a large grain size in order to reduce FGR, the present invention proposes a sintered nuclear fuel pellet consisting of grains having a grain size of below 500 nm, i.e., in the nanometre range. In particular, the sintered pellets may consist of grains having a size of less than 200 nm, and preferably of not more than 100 nm.

One merit of the present invention is to have found that such pellets with grains initially in the nanometre range permits promoting conditions similar to that of the so-called High Burn-up Structure (HBS) in standard fuel, and that this structure can be used to limit FGR. Indeed, the inventors have observed that, despite possible accelerations of matrix-gas drain-off into pores due to the much smaller grain size in the rim region of conventional fuel pellets, a significant advantage of this configuration is that the porosity formed is largely closed, ensuring almost full retention of the fission gas in the pores up to the porosity fractions of the order of 30% [1-3]. Therefore, by promoting conditions similar to that of the HBS structure over the whole pellet volume and already during the early stages of the irradiation, fission gas release can be efficiently prevented by trapping into the resulting HBS-like closed porosity.

It may further be noted that materials with a very fine grain size, as the proposed initial, sintered pellet (i.e. before irradiation) lead on internal gas evolution to the formation of faceted pores with large coordination numbers (i.e., large number of intersecting grains defining the pores), which are basically closed, whereby stable gas-tight pores can be formed under irradiation. This type of microstructure inhibits as well grain growth, delaying also possible in-pile fuel-grain-enlargement due to sustained operation at temperatures above 1000°C.

The sintered nuclear fuel pellet preferably exhibits a bulk density of at least 95% of the theoretical density, more preferably of at least 98%.

A particularly preferred practical value for the maximum grain size of the initial (as-fabricated) pellet is of around 200 nm or below, such that under irradiation the average grain size does not exceed 300 nm, which is the observed mean grain diameter of the stable Rim structure. Nevertheless, it is expected that, as recently confirmed in the literature concerning nanocrystalline metals subjected to proton irradiation, defects formed under irradiation (e.g., dislocations-cells) may cause further grain subdivision of the initial nanocrystalline material, an effect that will compensate for or even override grain growth.

A further important advantage of the pellet of the invention is its potential enhanced plasticity and accelerated creep rate, the latter being foreseen to greatly exceed that of the doped and undoped, conventional large grain fuels. This clearly diminishes the risk of brittle intergranular fracture of the fuel and favours the relaxation of internal stresses by plastic deformation. An additional advantage of this invention is that since creep acceleration can be obtained solely by grain refinement, the utilization of foreign additions can be avoided thus allowing a higher fraction of uranium atoms to be packed in the lattice, and therefore a higher specific burn-up to be reached.

Finally, the improved mechanical behaviour of the fuel due to the increase in the fracture toughness and strength of the nanocrystalline material facilitates the fabrication processes, for example by enabling reduction of rejects due to pellet-chipping during the finishing stage.

The fine-grained structure of the pellets of the invention will thus exhibit an improved behaviour from fabrication to irradiation up to high burn-ups, and can be applied to PWR and BWR power plants as well as to other nuclear power plants for transmutation purposes. The fuel material may be of various types, for example of the monolithic (homogeneous) type or of the dispersed (heterogeneous) type based on UO₂ matrixes (e.g. heterogeneous mixed oxide fuels (MOX)), or on inert non-uranium containing matrixes (e.g. ZrO₂-base matrix) foreseen for actinide burning.

Accordingly, at least part of the grains comprise at least one fissile metal. Heavy metals such as uranium, plutonium, and thorium may be employed, and more particularly compounds thereof such as their oxides, as well as mixtures thereof.

Depending on the fuel technology, essentially all grains in the pellet may be of similar composition, or a pellet may consist of different grains of different chemical composition.

In one embodiment, at least part of the grains have a chemical composition based on uranium dioxides and metal additives with formula (U_{1-y}-_{z}A_{y}M_{z})O₂₊ₓ, wherein A indicates the sum of actinides other than U and M the sum of metal additives.

In a second embodiment, the pellet has a chemical composition based on a carrier matrix with chemical composition (U_{1-z}M1_{z})O₂₊ₓ and a dispersed phase with chemical composition (U_{1-y-z}A_{y}M2_{z})O₂₊ₓ, wherein M1 indicates the sum of metal additives in the matrix, and A and M2 indicate the sum of actinides other than U and the sum of metal additives in the dispersed phase, respectively.

In a further embodiment, the pellet has a chemical composition based on a zirconia-based carrier matrix with chemical composition (Zr_{1-z}M3_{z})O₂ and a dispersed phase with chemical composition (U_{1-y-t}A_{y}M4ₜ)O₂₊ₓ, wherein M3 indicates the sum of metal additives or stabilizing agents in the matrix, and A and M4 indicate the sum of actinides other than U and the sum of metal additives in the dispersed phase, respectively.

It may be noted that the grain sizes indicated for the sintered pellet are meant as those measured e.g. by the line intersection method, where the distribution of sizes is further characterized by an "average grain size" (i.e. the arithmetic means of all sizes).

In accordance with the present invention, as stated above, the present pellets essentially consists of grains having a maximum size of less than 500 nm (i.e. essentially all grains in the pellets have a size below 500 nm), preferably not more than 200 nm and more preferably not more than 100 nm. It will be understood that the grain size distribution should be as uniform as possible, within the practical limits of powder technology.

According to another aspect of the present invention, a process for producing a sintered nuclear fuel pellet comprises:
(a) providing a nanocrystalline powder of nuclear fuel material;
(b) forming a pellet green-body from this nuclear fuel powder, said forming comprising preparing a liquid dispersion of said nanocrystalline powder, and consolidating said dispersed powder into a pellet green-body of desired shape;
(c) sintering said pellet green-body to obtain a sintered nuclear fuel pellet essentially consisting of grains having a size below 1 µm.

The resulting pellet, in the as sintered stage, is thus composed of submicron grains, which brings a number of advantages with respect to stress relaxation and FGR at high burn-ups, as explained hereinabove.

The starting nanocrystalline powder of nuclear fuel material shall preferably consist of particles having an average size between 10 and 40 nanometres. By average particle size is meant the arithmetic mean of all sizes.

As it is clear for those skilled in the art, the starting powder typically consists of single crystallites and crystallite aggregates. Individual crystallites and crystallite aggregates in the powder are herein indifferently referred to as "particle". Differently, the term grain is used to designate the elemental single-crystalline entities constituting the sintered pellet.

Colloidal forming routes are employed to prepare the green-body. Accordingly, a stable dispersion of the nanocrystalline powder in a liquid may be prepared with the help of surfactant(s), followed preferably by a de-agglomeration stage using, e.g., ultrasounds.

The dispersed powder is then consolidated by any appropriate consolidation mechanism (based on fluid removal or gelation) to form a pellet green-body of desired shape.

Slip casting, slow evaporation and centrifugation are other particularly preferred techniques alternative to gelation. If needed, the consolidated body may be subjected to a controlled drying.

Densification of the green-body is finally preferably achieved by sintering under controlled conditions in such a way as to avoid excessive grain growth and remain below a targeted maximum grain size in the as-sintered pellet, generally below 500 nm and more preferably below 200 nm or even 100 nm.

The present process permits manufacturing pellets having a density up to nearly 100%. It is also possible to adjust process parameters (e.g., pore formers additions) to tailor the porosity of the pellet. Preferably, the pellets have a porosity in the order of 5% or below, and of the closed type.

### BRIEF DESCRIPTION OF THE DRAWING

The present invention will now be described, by way of example, with reference to the accompanying drawing, in which:

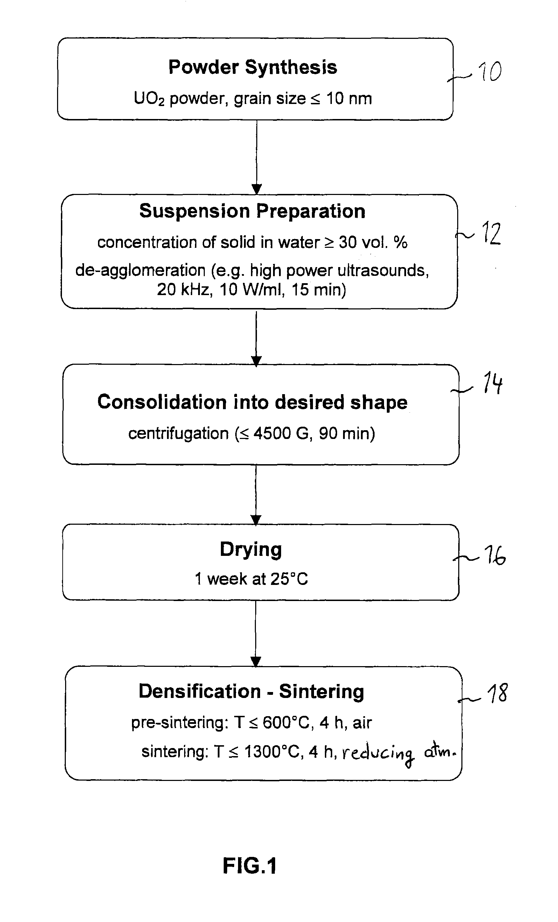

FIG. 1: is a diagram illustrating a preferred embodiment of a method for manufacturing a sintered nuclear fuel pellet according to the present invention.

### DETAILED DESCRIPTION OF A PREFERRED EMBODIMENT

Contrary to conventional sintered nuclear fuel pellets having a grain size in the range of several microns up to several tens microns, the present pellet consists of grains exhibiting sizes in the nanometer range.

The inventors have found that such initial pellet structure makes it possible to promote conditions similar to that of the HBS structure throughout the pellet, in order to prevent/reduce FGR by trapping of the gases into closed pores in the pellets, instead of relying on long diffusion distances as in conventionally proposed large grained pellets. The use of such nanocrystalline pellets is not only advantageous with respect to FGR, but has an enhanced plasticity, which favours stress relaxation.

A possible method of manufacturing such pellet will now be described with reference to Fig.1, using a colloidal manufacturing route and UO₂ as nuclear fuel material.

First, a nanocrystalline powder of nuclear fuel material (UO₂) is prepared (box 10). It may consist of particles having an average size in the range of between 10 to 40 nanometres.

Next a stable dispersion (box 12) of the powder in a liquid is prepared, up to the highest possible concentration with the help of surfactant(s) and optional pore former(s). The UO₂ particles are dispersed in de-ionized water at a concentration of at least 30 vol.%. Dolappix C-64 may be used as deflocculant at a concentration of 1 wt. %.

The suspended powder is then de-agglomerated using high-power ultrasounds at 20 kHz, for 15 min and a power of 10 W/ml.

Next, the dispersion is consolidated (box 14) by ultra centrifugation (e.g. during 90 minutes at a relative centrifugal force (rcf) of the order of 4500 G, G=earth's gravitational acceleration) to obtain the desired solid geometry of the pellet green-body.

The resulting green-body is then subjected to a slow drying step (box 16) for 1 week at 25°C in order to achieve a gradual reduction from 90% H₂O-content down to ambient humidity conditions.

Densification (18) is finally carried out in two sub-steps. The dried pellet is first subjected to a pre-sintering step in order to burn-out additives and eliminate residual binding water. This can be done at a temperature of no more than 600°C, for 4 hours in air. Sintering is then carried out in reducing atmosphere for 4 hours at a temperature of no more than 1300°C.

### LIST OF REFERENCES

[1] "Room-temperature microindentation behaviour of LWR-fuels, part 1: fuel hardness"; J. Spino, J. Cobos-Sabate, F. Rousseau; Journal of Nuclear Materials 322 (2003) 204-216.
[2] "Comments of the threshold porosity for fission gas release in high burn-up fuels"; J. Spino, D. Papaioannou, J-P- Glatz; Journal of Nuclear Materials 328 (2004) 67-70.
[3] "Stereological evolution of the rim structure in PWR-fuels at prolonged irradiation: Dependencies with burn-up and temperature"; J. Spino, A.D. Stalios, H. Santa Cruz, D. Baron; Journal of Nuclear Materials 354 (2006) 66-84.

## Claims

1. Sintered nuclear fuel pellet, in particular for use in PWR or BWR nuclear reactors, **characterised in that** said pellet essentially consists of grains having a size of less than 500 nm.

2. Sintered nuclear fuel pellet according to claim 1, **characterised in that** it essentially consists of grains having a size of less than 200 nm, more preferably not more than 100 nm.

3. Sintered nuclear fuel pellet according to any one of the preceding claims, **characterised by** a uniform grain size distribution throughout the pellet.

4. Sintered nuclear fuel pellet according to any one of the preceding claims, **characterised by** a predominantly closed porosity, preferably in the order of 5% or below.

5. Sintered nuclear fuel pellet according to any one of the preceding claims, **characterised by** a bulk density of at least 95%.

6. Sintered nuclear fuel pellet according to any one of the preceding claims, **characterized in that** at least part of said grains comprise at least one fissile metal.

7. Sintered nuclear fuel pellet according to claim 6, **characterized in that** said at least one fissile metal is selected from the group comprising: uranium, plutonium, thorium and mixtures thereof.

8. Sintered nuclear fuel pellet according to any one of the preceding claims, **characterized in that** at least part of the grains have a chemical composition based on uranium dioxides and metal additives with formula (U_{1-y-z}A_{y}M_{z})O₂₊ₓ, wherein A indicates the sum of actinides other than U and M the sum of metal additives.

9. Sintered nuclear fuel pellet according to any one of claims 1 to 7, **characterized by** a chemical composition based on a carrier matrix with chemical composition (U_{1-z} M1_{z})O₂₊ₓ and a dispersed phase with chemical composition (U_{1-y-z}A_{y}M2_{z})O₂+x, wherein M1 indicates the sum of metal additives in the matrix, and A and M2 indicate the sum of actinides other than U and the sum of metal additives in the dispersed phase, respectively.

10. Sintered nuclear fuel pellet according to any one of the claims 1 to 7, **characterized by** a chemical composition based on a zirconia-based carrier matrix with chemical composition (Zr_{1-z} M3_{z})O₂ and a dispersed phase with chemical composition (U_{1-y-t}A_{y}M4ₜ)O₂₊ₓ, wherein M3 indicates the sum of metal additives or stabilizing agents in the matrix, and A and M4 indicate the sum of actinides other than U and the sum of metal additives in the dispersed phase, respectively.

11. Sintered nuclear fuel pellet according to any one of the preceding claims, **characterised by** a cylindrical or other solid geometry.

12. Process for producing a sintered nuclear fuel pellet comprising:
(a) preparing a nanocrystalline powder of nuclear fuel material;
(b) forming a pellet green-body from this nuclear fuel powder, said forming comprising preparing a liquid dispersion of said nanocrystalline powder, and consolidating said dispersed powder into a pellet green-body of desired shape;
(c) sintering said pellet green-body to obtain a sintered nuclear fuel pellet consisting of grains having a grain size of below 500 nm.

13. Process according to claim 12, wherein the solid concentration in said liquid dispersion is of at least 30 vol. %.

14. Process according to claim 12 or 13, wherein said nanocrystalline powder of nuclear fuel material essentially consists of particles having an average size between 10 and 40 nm.

## Patentansprüche

1. Gesintertes Kernbrennstoff-Pellet, insbesondere zur Verwendung in Druckwasser- oder Siedewasser-Kernreaktoren, **dadurch gekennzeichnet, dass** das Pellet im Wesentlichen aus Körnern einer Größe von weniger als 500 nm besteht.

2. Gesintertes Kernbrennstoff-Pellet nach Anspruch 1, **dadurch gekennzeichnet, dass** es im Wesentlichen aus Körnern einer Größe von weniger als 200 nm, mehr bevorzugt nicht mehr als 100 nm besteht.

3. Gesintertes Kernbrennstoff-Pellet nach einem der vorhergehenden Ansprüche, **gekennzeichnet durch** eine gleichmäßige Kornverteilung im gesamten Pellet.

4. Gesintertes Kernbrennstoff-Pellet nach einem der vorhergehenden Ansprüche, **gekennzeichnet durch** eine vorwiegend geschlossene Porosität, vorzugsweise in einer Größenordnung von 5% oder weniger.

5. Gesintertes Kernbrennstoff-Pellet nach einem der vorhergehenden Ansprüche, **gekennzeichnet durch** eine Schüttdichte von wenigstens 95%.

6. Gesintertes Kernbrennstoff-Pellet nach einem der vorhergehenden Ansprüche, **dadurch gekennzeichnet, dass** zumindest ein Teil der Körner wenigstens ein Spaltmetall umfasst.

7. Gesintertes Kernbrennstoff-Pellet nach Anspruch 6, **dadurch gekennzeichnet, dass** das wenigstens eine Spaltmetall ausgewählt ist aus der Gruppe bestehend aus: Uran, Plutonium, Thorium und Mischungen derselben.

8. Gesintertes Kernbrennstoff-Pellet nach einem der vorhergehenden Ansprüche, **dadurch gekennzeichnet, dass** zumindest ein Teil der Körner eine chemische Zusammensetzung basierend auf Urandioxiden und Metallzusatzstoffen der Formel (U_{1-y-z}A_{y}M_{z})O₂₊ₓ aufweist, wobei A die Summe von Actiniden anzeigt, die nicht U sind, und M die Summe von Metallzusatzstoffen anzeigt.

9. Gesintertes Kernbrennstoff-Pellet nach einem der Ansprüche 1 bis 7, **gekennzeichnet durch** eine chemische Zusammensetzung basierend auf einer Trägermatrix der chemischen Zusammensetzung (U_{1-z} M1_{z})O₂₊ₓ und einer dispergierten Phase der chemischen Zusammensetzung (U_{1-y-z}A_{y}M2_{z})O₂₊ₓ, wobei M1 die Summe an Metallzusatzstoffen in der Matrix anzeigt und A und M2 die Summe an Actiniden, die nicht U sind, bzw. die Summe der Metallzusatzstoffe in der dispergierten Phase anzeigen.

10. Gesintertes Kernbrennstoff-Pellet nach einem der Ansprüche 1 bis 7, **gekennzeichnet durch** eine chemische Zusammensetzung basierend auf einer Trägermatrix auf Zirkondioxidbasis der chemischen Zusammensetzung (Zr_{1-z} M3_{z})O₂ und einer dispergierten Phase der chemischen Zusammensetzung (U_{1-y-t}A_{y}M4ₜ)O₂₊ₓ, wobei M3 die Summe an Metallzusatzstoffen oder Stabilisatoren in der Matrix anzeigt und A und M4 die Summe an Actiniden, die nicht U sind, bzw. die Summe der Metallzusatzstoffe in der dispergierten Phase anzeigen.

11. Gesintertes Kernbrennstoff-Pellet nach einem der vorhergehenden Ansprüche, **gekennzeichnet durch** eine zylindrische oder andere Stereometrie.

12. Verfahren zur Herstellung eines gesinterten Kernbrennstoff-Pellets, umfassend:
a) Vorbereiten eines nanokristallinen Pulvers aus Kernbrennstoffmaterial;
b) Bilden eines Pelletrohlings aus diesem Kernbrennstoffpulver, wobei das Bilden das Vorbereiten einer flüssigen Dispersion aus dem nanokristallinen Pulver und das Verdichten des dispergierten Pulvers zu einem Pelletrohling einer gewünschten Form umfasst;
c) Sintern des Pelletrohlings, um ein gesintertes Kernbrennstoff-Pellet zu erhalten, welches aus Körnern mit einer Korngröße von weniger als 500 nm besteht.

13. Verfahren nach Anspruch 12, wobei die Feststoffkonzentration in der flüssigen Dispersion wenigstens 30 Vol.-% beträgt.

14. Verfahren nach Anspruch 12 oder 13, wobei das nanokristalline Pulver aus Kernbrennstoffmaterial im Wesentlichen aus Teilchen mit einer Durchschnittsgröße zwischen 10 und 40 nm besteht.

## Revendications

1. Pastille de combustible nucléaire frittée, en particulier pour une utilisation dans des réacteurs nucléaires REP ou REB, **caractérisée en ce que** ladite pastille consiste essentiellement en des grains ayant une taille de moins de 500 nm.

2. Pastille de combustible nucléaire frittée selon la revendication 1, **caractérisée en ce qu'**elle consiste essentiellement en des grains ayant une taille de moins de 200 nm, plus préférablement pas plus de 100 nm.

3. Pastille de combustible nucléaire frittée selon l'une quelconque des revendications précédentes, **caractérisée par** une distribution de tailles de grains uniforme dans toute la pastille.

4. Pastille de combustible nucléaire frittée selon l'une quelconque des revendications précédentes, **caractérisée par** une porosité de façon prédominante fermée, préférablement de l'ordre de 5% ou inférieure.

5. Pastille de combustible nucléaire frittée selon l'une quelconque des revendications précédentes, **caractérisée par** une masse volumique apparente d'au moins 95%.

6. Pastille de combustible nucléaire frittée selon l'une quelconque des revendications précédentes, caractérisée en qu'au moins une partie desdits grains comprend au moins un métal fissile.

7. Pastille de combustible nucléaire frittée selon la revendication 6, **caractérisée en ce que** ledit au moins un métal fissile est choisi parmi le groupe comprenant : l'uranium, le plutonium, le thorium et des mélanges de ceux-ci.

8. Pastille de combustible nucléaire frittée selon l'une quelconque des revendications précédentes, caractérisée en qu'au moins une partie des grains ont une composition chimique basée sur des dioxydes d'uranium et des additifs métalliques avec la formule (U_{1-y-z}A_{y}M_{z})O₂₊ₓ, dans laquelle A indique la somme d'actinides autres que U et M la somme des additifs métalliques.

9. Pastille de combustible nucléaire frittée selon l'une quelconque des revendications 1 à 7, **caractérisée par** une composition chimique basée sur une matrice support avec une composition chimique (U_{1-z}M1_{z})O₂₊ₓ et une phase dispersée avec une composition chimique (U_{1-y-z}A_{y}M2_{z})O₂₊ₓ, dans lesquelles M1 indique la somme d'additifs métalliques dans la matrice, et A et M2 indiquent la somme d'actinides autres que U et la somme d'additifs métalliques dans la phase dispersée, respectivement.

10. Pastille de combustible nucléaire frittée selon l'une quelconque des revendications 1 à 7, **caractérisée par** une composition chimique basée sur une matrice support à base d'oxyde de zirconium avec une composition chimique (Zr_{1-z}M3_{z})O₂ et une phase dispersée avec une composition chimique (U_{1-y-t}A_{y}M4ₜ)O₂₊ₓ, dans lesquelles M3 indique la somme d'additifs métalliques ou d'agents de stabilisation dans la matrice, et A et M4 indiquent la somme d'actinides autres que U et la somme d'additifs métalliques dans la phase dispersée, respectivement.

11. Pastille de combustible nucléaire frittée selon l'une quelconque des revendications précédentes, **caractérisée par** une géométrie cylindrique ou autre géométrie solide.

12. Procédé de production d'une pastille de combustible nucléaire frittée comprenant :
(a) la préparation d'une poudre nanocristalline de matériau combustible nucléaire ;
(b) la formation d'un corps vert de pastille à partir de cette poudre de combustible nucléaire, ladite formation comprenant la préparation d'une dispersion liquide de ladite poudre nanocristalline, et la consolidation de ladite poudre dispersée en un corps vert de pastille de forme désirée ;
(c) le frittage dudit corps vert de pastille pour obtenir une pastille de combustible nucléaire frittée consistant en des grains ayant une taille de grains de moins de 500 nm.

13. Procédé selon la revendication 12, dans lequel la concentration de solide dans ladite dispersion liquide est d'au moins 30% en volume.

14. Procédé selon la revendication 12 ou 13, dans lequel ladite poudre nanocristalline de matériau combustible nucléaire consiste essentiellement en des particules ayant une taille moyenne entre 10 et 40 nm.
